# EUROPEAN PATENT APPLICATION

(11) **EP 4 765 665 A1**
(43) Date of publication of application: **24.06.2026**
(21) Application number: 24864484.1
(22) Date of filing: 30.08.2024
(51) Int. Cl.: H04B 7/06

(54) **SIGNAL SENDING METHOD, ELECTRONIC DEVICE AND COMPUTER READABLE STORAGE MEDIUM**

(30) Priority: 11.09.2023 CN 202311171966
(71) Applicant: HUAWEI TECHNOLOGIES CO., LTD., Shenzhen 518129 (CN)
(72) Inventor: LIN, Yousi, Shenzhen, Guangdong 518129 (CN); ZHU, Li, Shenzhen, Guangdong 518129 (CN); LI, Li, Shenzhen, Guangdong 518129 (CN); HUANG, Hui, Shenzhen, Guangdong 518129 (CN); GAO, Hui, Shenzhen, Guangdong 518129 (CN); XU, Kai, Shenzhen, Guangdong 518129 (CN); SUN, Shaofeng, Shenzhen, Guangdong 518129 (CN)
(74) Representative: Gill Jennings & Every LLP
(86) International application number: PCT/CN2024/116105
(87) International publication number: WO 2025/055762

(57) **Abstract**

This application provides a signal sending method, an electronic device, and a computer-readable storage medium, which are applied to the field of communication technologies, to resolve problems of poor transmission efficiency and unstable performance of a user traffic channel that are caused because a current hybrid beamforming technology cannot resolve a compatibility problem of a plurality of analog beams. According to the signal sending method, an antenna array may be decoupled into a plurality of subarrays based on obtained configuration information, and a controller may control the plurality of subarrays to output a plurality of types of analog beams at a same moment. A compatibility problem of a plurality of types of analog beams can be resolved without changing a structure of a phased array antenna, to increase a coverage area of a signal. In addition, outputting the plurality of types of analog beams through a same antenna array can also simultaneously meet a plurality of traffic requirements, thereby improving transmission efficiency.

## Description

This application claims priority to Chinese Patent Application No. 202311171966.7, filed with the China National Intellectual Property Administration on September 11, 2023 and entitled "SIGNAL SENDING METHOD, ELECTRONIC DEVICE, AND COMPUTER-READABLE STORAGE MEDIUM", which is incorporated herein by reference in its entirety.

### TECHNICAL FIELD

This application relates to the field of communication technologies, and in particular, to a signal sending method, an electronic device, and a computer-readable storage medium.

### BACKGROUND

With continuous development of wireless communication technologies, high-speed data traffic and ubiquitous access requirements are experiencing an explosive growth. To better meet communication requirements, in many current communication solutions, a multi-antenna array is used at a transmit end or a receive end. Spectral efficiency of a communication system can be greatly improved according to a simple signal processing technology by using the multi-antenna array. Therefore, the multi-antenna array is of great significance in the communication system. In the multi-antenna array, a design of beamforming plays a key role in improving performance of the communication system. A hybrid beamforming (hybrid beamforming, HBF) technology, as a compromise between performance and costs, has a good practical prospect. HBF is used to add, on the basis of conventional digital beamforming, analog beamforming applied to a radio frequency signal close to a front end of an antenna. The HBF is mainly implemented by adding a phase shifter. For the analog beamforming, a large-scale antenna array is connected to the phase shifter, and a signal transmitted by the large-scale antenna array is superposition of a plurality of phase-shifted versions of a basic signal in space, so that the signal can point to a specific direction. Based on this solution, a baseband processing chip and the antenna array may be connected through a small quantity of radio frequency (radio frequency, RF) links, to greatly reduce complexity of the communication system. In addition, the analog beamforming can eliminate specific interference and obtain more array gains. Based on this, if further processing is performed in digital domain of the baseband processing chip, interference between a plurality of data streams can be better eliminated, thereby ensuring transmission quality. However, a current hybrid beamforming technology cannot resolve a compatibility problem of a plurality of analog beams, resulting in poor transmission efficiency.

### SUMMARY

Embodiments of this application provide a signal sending method, an electronic device, and a computer-readable storage medium, to send a plurality of types of analog beams through a same antenna array, so as to resolve a compatibility problem of the plurality of types of analog beams, thereby improving transmission efficiency.

To achieve the foregoing objectives, embodiments of this application provide the following technical solutions.

According to a first aspect, a signal sending method is provided, and is applied to a network device. The network device includes a phase shift circuit and an antenna array coupled to the phase shift circuit. The method may be performed by a controller or a control circuit. During execution of the method, first configuration information may be first obtained. The first configuration information indicates a plurality of subarrays in the antenna array to output a plurality of types of analog beams at a same moment. Then, a first control signal is output to the phase shift circuit based on the first configuration information. The first control signal indicates the phase shift circuit to output a plurality of types of analog beams at a same moment through the plurality of subarrays. In this manner, without changing a structure of a phased array antenna, the controller or the control circuit may decouple the antenna array into the plurality of subarrays based on the obtained first configuration information, and output a plurality of types of analog beams at a same moment through the plurality of subarrays, to resolve a compatibility problem of the plurality of types of analog beams, thereby improving transmission efficiency. In addition, because the same antenna array may output different types of analog beams including a common signal analog beam and a data signal analog beam at the same moment, a user can also select an appropriate analog beam for data transmission in a common signaling slot, and a user traffic channel can obtain more antenna gains. Therefore, stable performance of the user traffic channel can be ensured in different slots.

In a possible implementation, during obtaining of the first configuration information, current state information of the network device may be first received. Then, the first configuration information is obtained based on the state information. In this manner, the controller may obtain the corresponding configuration information based on the current state information of the network device, to better meet a use requirement in a current environment.

In a possible implementation, the state information includes at least one of position information of the network device, current time, a current communication slot, user distribution information, and a user traffic volume. In view of this, the antenna array may be decoupled into the plurality of subarrays based on at least one of the foregoing information, to better meet actual requirements of various application scenarios.

In a possible implementation, during outputting of the first control signal to the phase shift circuit based on the first configuration information, the antenna array may be first decoupled into a plurality of regularly shaped subarrays based on the first configuration information. Then, the first control signal is output to the phase shift circuit based on an analog beam type of each of the subarrays. In view of this, the antenna array may be decoupled into the plurality of regularly shaped subarrays based on the first configuration information, and different types of analog beams are sent, to make directions of the analog beams more controllable.

In a possible implementation, during outputting of the first control signal to the phase shift circuit based on the first configuration information, the antenna array may be first decoupled into a plurality of irregularly shaped subarrays based on the first configuration information. Then, the first control signal is output to the phase shift circuit based on an analog beam type of each of the subarrays. In view of this, the antenna array may be decoupled into the plurality of irregularly shaped subarrays based on the first configuration information, and different types of analog beams are sent, to make coverage directions of the analog beams more flexible and changeable.

In a possible implementation, the network device further includes a variable gain amplification circuit. The variable gain amplification circuit is coupled between the antenna array and the phase shift circuit, and the variable gain amplification circuit is further coupled to the controller. In view of this, the method further includes: sending a second control signal to the variable gain amplification circuit based on the first configuration information. The second control signal indicates the variable gain amplification circuit to increase power of an analog beam output by each of the subarrays. In the foregoing implementation process, although the antenna array is decoupled into the plurality of subarrays and different types of analog beams are sent through the plurality of subarrays to increase coverage areas of the analog beams, gains of the analog beams are reduced and transmission distances are shortened when the entire antenna array is decoupled into the plurality of subarrays. Therefore, a transmission distance of an analog beam output by each of the subarrays may be increased by increasing power of the variable gain amplification circuit, to better meet requirements of more users.

In a possible implementation, the network device further includes a variable gain amplification circuit. The variable gain amplification circuit is coupled to the phase shift circuit. In view of this, the method further includes: sending a second control signal to the variable gain amplification circuit based on the first configuration information. The second control signal indicates the variable gain amplification circuit to increase power of an analog beam output by each of the subarrays. In view of this, a transmission distance of the analog beam output by each of the subarrays may also be increased by increasing a gain of the variable gain amplification circuit, to better meet requirements of more users.

In a possible implementation, a power increase amplitude of the analog beam output by each of the subarrays is determined based on a ratio of each of the subarrays to the antenna array. In view of this, the power increase amplitude of the analog beam output by each of the subarrays can better meet a requirement of a transmission distance.

In a possible implementation, the method further includes: obtaining second configuration information. The second configuration information indicates the entire antenna array to output a single analog beam. Then, a third control signal is output to the phase shift circuit based on the second configuration information. The third control signal indicates the phase shift circuit to output the single analog beam through the entire antenna array. In view of this, when the entire antenna array needs to be used to output the analog beam, automatic adjustment may also be performed based on the obtained configuration information.

According to a second aspect, an electronic device is provided. The electronic device includes a memory and a processor. The memory stores computer program instructions. When the computer program instructions are executed by the processor, the method according to any one of the possible implementations of the first aspect is implemented.

According to a third aspect, a computer-readable storage medium is provided. The computer-readable storage medium stores computer program instructions. When the computer program instructions are executed by a processor, the method according to any one of the possible implementations of the first aspect is implemented.

According to a fourth aspect, a computer program product is provided. The computer program product includes computer instructions, and when the computer instructions are run on a computer, the computer is caused to implement the method according to any one of the possible implementations of the first aspect.

For technical effects brought by the second aspect to the fourth aspect and the possible implementations, refer to the technical effect descriptions of the first aspect and the possible implementations. Details are not described herein again.

### BRIEF DESCRIPTION OF DRAWINGS

FIG. 1 is a diagram of a structure of a communication system;
FIG. 2 is a diagram of a structure of a radio frequency transmitting circuit supporting hybrid beamforming;
FIG. 3 is a diagram of a structure of another radio frequency transmitting circuit supporting hybrid beamforming;
FIG. 4 is a diagram of a structure of still another radio frequency transmitting circuit supporting hybrid beamforming;
FIG. 5 is a diagram of a sending range of an analog beam according to an embodiment of this application;
FIG. 6 is a diagram of a structure of a network device according to an embodiment of this application;
FIG. 7 is a flowchart of signal sending of a network device according to an embodiment of this application;
FIG. 8 is a diagram of a decoupling manner of an antenna array according to an embodiment of this application;
FIG. 9 is a diagram of another decoupling manner of an antenna array according to an embodiment of this application;
FIG. 10 is a diagram of still another decoupling manner of an antenna array according to an embodiment of this application;
FIG. 11 is a diagram of still another decoupling manner of an antenna array according to an embodiment of this application;
FIG. 12 is a diagram of still another decoupling manner of an antenna array according to an embodiment of this application;
FIG. 13 is a diagram of a structure of another network device according to an embodiment of this application;
FIG. 14 is a diagram of a structure of another network device according to an embodiment of this application; and
FIG. 15 is a diagram of a structure of an electronic device according to an embodiment of this application.

### DESCRIPTION OF EMBODIMENTS

The following describes the technical solutions in embodiments of this application with reference to the accompanying drawings in embodiments of this application.

To clearly describe the technical solutions in embodiments of this application, terms such as "first" and "second" are used in embodiments of this application to distinguish between same items or similar items that provide basically same functions and purposes. A person skilled in the art may understand that the terms such as "first" and "second" are not intended to limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the term such as "example" or "for example" is intended to present a related concept in a specific manner for ease of understanding.

When some embodiments are described, expressions of "coupled" and "connected" and their extensions may be used. For example, for description of some embodiments, the term "connected" may indicate that two or more components are in direct physical contact or electrical contact with each other. For another example, when some embodiments are described, the term "coupled" may be used to indicate that two or more parts are in direct physical contact or electrical contact. However, the term "coupled" or "communicatively coupled (communicatively coupled)" may alternatively mean that two or more parts are not in direct contact, but still cooperate or interact with each other. Embodiments disclosed herein are not necessarily limited to content of this specification.

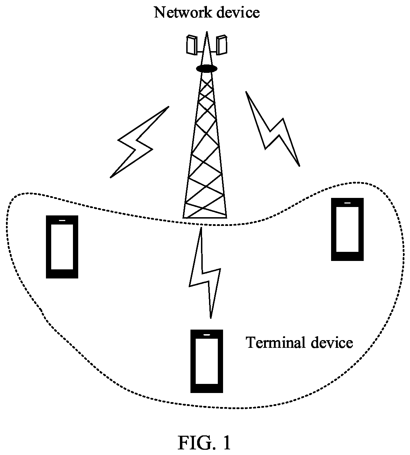

As shown in FIG. 1, a current communication system usually includes a network device and a terminal device. The network device may provide wireless access for one or more terminal devices within a coverage area. The network device is a node in a radio access network (radio access network, RAN), may also be referred to as a base station, and may further be referred to as a RAN node (or device). The network device may be a next-generation NodeB (next generation NodeB, gNB), a next-generation evolved NodeB (next generation evolved NodeB, Ng-eNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), or a wireless fidelity (wireless fidelity, Wi-Fi) access point (access point, AP). The network device may alternatively be a satellite, and the satellite may also be referred to as a high-altitude platform, a high-altitude aircraft, or a satellite base station. The network device may alternatively be another device having functions of a network device. For example, the network device may alternatively be a device that functions as a network device in device-to-device (device-to-device, D2D) communication. The network device may alternatively be a network device in a possible future communication system. The network device further includes an active antenna unit (active antenna unit, AAU). The AAU may implement some physical layer processing functions, radio frequency processing, and functions related to beamforming of an active antenna. The terminal device is also referred to as user equipment (user equipment, UE), a mobile station (mobile station, MS), a mobile terminal (mobile terminal, MT), or the like, and is a device that provides voice and/or data connectivity for users. For example, the terminal device includes a handheld device, a vehicle-mounted device, or the like that has a wireless connection function. In addition, the terminal device may be a mobile phone, a tablet computer, a notebook computer, a palmtop computer, a mobile internet device (mobile internet device, MID), a wearable device (such as a smartwatch, a smart band, or a pedometer), a vehicle-mounted device, a virtual reality (virtual reality, VR) device, an augmented reality (augmented reality, AR) device, a wireless terminal in industrial control (industrial control), a smart home device (such as a refrigerator, a television, an air conditioner, or an electric meter), a smart robot, a workshop device, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (such as a smart robot, a hot air balloon, an uncrewed aerial vehicle, or an airplane), or the like. The terminal device may alternatively be another device having functions of a terminal. For example, the terminal device may alternatively be a device that functions as a terminal in D2D communication.

Currently, many network devices and terminal devices communicate with each other through large-scale antenna arrays. Both an antenna array of the network device and an antenna array of the terminal device include a plurality of antennas, and the plurality of antennas form a multiple-input multiple-output (multiple-input multiple-output, MIMO) system. In some MIMO systems, a corresponding signal is output from an antenna array in a digital beamforming (digital beamforming, DBF) manner. In this manner, an amplitude and a phase of a signal may be adjusted arbitrarily, but each antenna needs to be configured with an independent RF link, increasing costs and power consumption. To resolve this problem, in some MIMO systems, an HBF technology is used to add, on the basis of conventional digital beamforming, analog-domain beamforming applied to a radio frequency signal close to a front end of an antenna. The HBF technology is mainly implemented by adding a phase shifter. An antenna array is connected to the phase shifter, and a signal transmitted by the antenna array is superposition of a plurality of phase-shifted versions of a basic signal in space, so that the signal can point to a specific direction. A baseband processing chip and the antenna are connected through a small quantity of RF links, so that system complexity can be greatly reduced. In addition, analog beamforming can eliminate specific interference and obtain more array gains. Based on this, if further processing is performed in digital domain of the baseband processing chip, interference between a plurality of data streams can be better eliminated, thereby ensuring transmission quality.

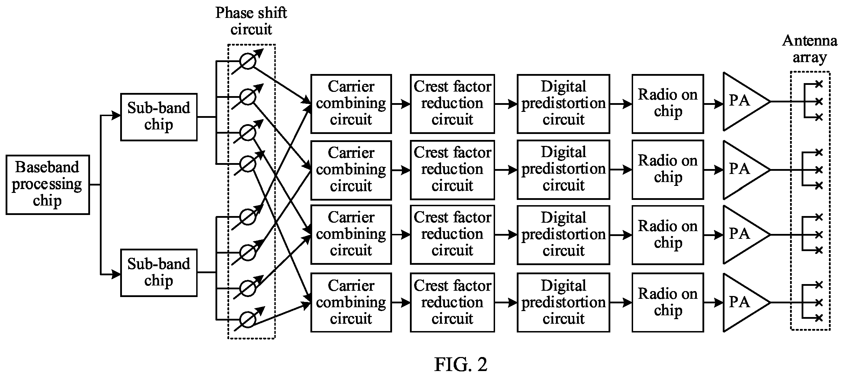

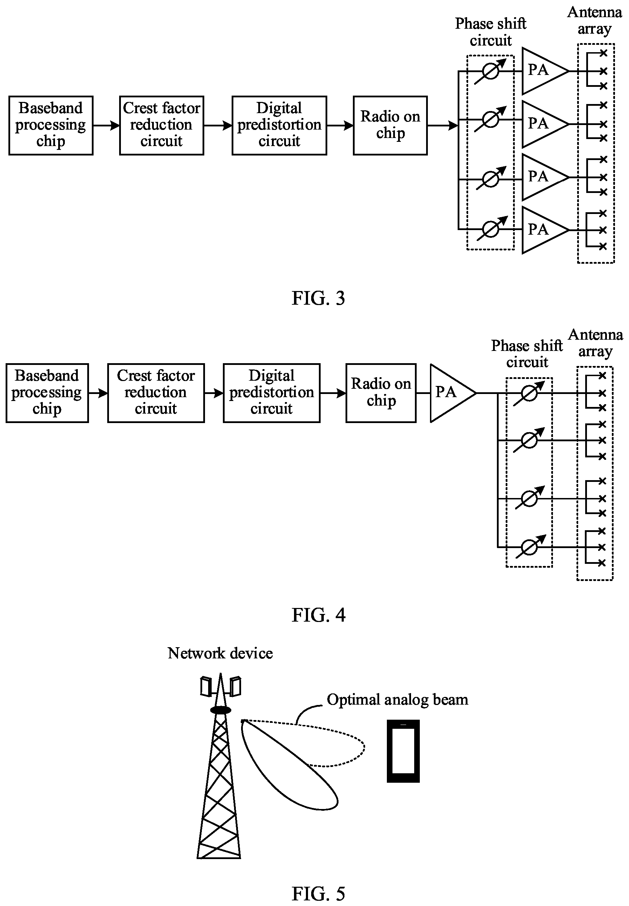

During specific implementation, based on different placement positions of phase shifters, there are a plurality of types of transmit link architectures in the existing HBF technology. An antenna array having 12 antennas is used as an example. As shown in FIG. 2, in a transmit link architecture, a baseband processing chip is coupled to a phase shift circuit through two sub-band chips. The phase shift circuit may be controlled by using a controller. The phase shift circuit includes a plurality of phase shifters, and an output end of each sub-band chip is coupled to four carrier combining circuits through four phase shifters. Then, each carrier combining circuit is coupled to three antennas in the antenna array through a radio on chip and a power amplifier after passing through a crest factor reduction (crest factor reduction, CFR) circuit and a digital predistortion (digital predistortion, DPD) circuit. The phase shifter is placed before the carrier combining circuit, and controlled by using the controller, so that beams of different sub-bands have different directions. However, in this method, a quantity of digital intermediate frequency circuits and a quantity of radio frequency channels cannot be reduced, and costs and power consumption are high. As shown in FIG. 3, in another type of transmit link architecture, a baseband processing chip is coupled to a plurality of phase shifters through a CFR circuit, a DPD circuit, and a radio chip (radio on chip, ROC) in sequence. In addition, the plurality of phase shifters are coupled to a controller, and each phase shifter is coupled to a plurality of antennas in an antenna array through a power amplifier (power amplifier, PA). In this manner, although different sub-bands do not have a capability of frequency-division beam-directions, a quantity of digital intermediate frequency circuits is reduced, and power consumption is controllable. As shown in FIG. 4, in another type of transmit link architecture, a baseband processing chip is coupled to a plurality of phase shifters in a phase shift circuit through a CFR circuit, a DPD circuit, a radio on chip (radio on chip, ROC), and a power amplifier in sequence. In addition, the phase shift circuit may be controlled by using a controller, and each phase shifter is coupled to a plurality of antennas in an antenna array through a power amplifier. In this manner, a quantity of power amplifiers and a quantity of digital intermediate frequency circuits can be reduced, and power consumption and costs can be further reduced. Therefore, the architecture in FIG. 4 is most widely used currently. However, as shown in FIG. 5, when the foregoing architecture is used, usually, only one combined analog beam can be generated across a full bandwidth on the entire antenna array at a same moment, and vertical and horizontal widths of the analog beam are limited to some extent. In a common signaling slot, currently, an analog beam corresponding to a common signal such as a synchronization broadcast signal (synchronization signal/PBCH Block, SSB), a remaining minimum system information (remaining minimum system information, RMSI), or a paging (paging) signal is preferentially sent through the antenna array, and traffic data is usually a non-optimal analog beam (a dashed analog beam in FIG. 5). If in the common signaling slot, a user is not within a pointing range of a common signal analog beam, the user cannot obtain an optimal antenna gain. In a non-common signaling slot, currently, a time division method is usually used. The antenna array sends only one traffic analog beam at a same moment, and even if a plurality of signals exist simultaneously, a plurality of analog beams cannot be compatible. Therefore, regardless of whether in the common signaling slot or the non-common signaling slot, some users may fail to obtain the optimal antenna gain. In different slots, performance of user traffic channels is unstable, and quality of received signals fluctuates significantly, affecting user experience.

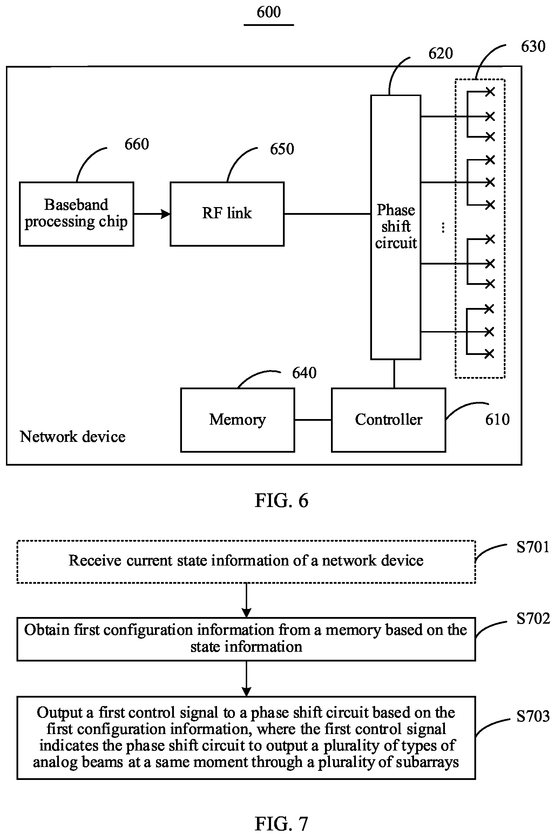

To resolve the foregoing problem, an embodiment of this application provides a signal sending method. The signal sending method may be applied to a network device 600. As shown in FIG. 6, the network device 600 includes a controller 610, a phase shift circuit 620 coupled to the controller 610, a memory 640 coupled to the controller 610, and an antenna array 630 coupled to the phase shift circuit 620. The phase shift circuit 620 is further coupled to a baseband processing chip 660 through an RF link 650. The controller 610 includes but is not limited to a central processing unit (central processing unit, CPU), a network processing unit (network processing unit, NPU), a graphics processing unit (graphics processing unit, GPU), a digital signal processor (digital Signal processor, DSP), a general-purpose processor, or the like. As shown in FIG. 7, when the network device 600 needs to send a signal, the following manner may be used.

S701: The controller receives current state information of the network device.

The current state information of the network device 600 includes at least one of position information of the network device 600, current time, a current communication slot, user distribution information, and a user traffic volume. An operator may set corresponding configuration information based on at least one of the position information of the network device 600, the current time, the current communication slot, the user distribution information, and the user traffic volume. The position information of the network device 600 may be obtained through a positioning sensor. The positioning sensor may be selected from, but is not limited to, a GPS sensor and a BeiDou positioning sensor. The current time of the network device 600 may be obtained by setting a clock module on the network device 600. The communication slot may be determined based on a frame structure of a transmission channel during communication. Different channel frame structures may be used in different communication slots, facilitating differentiation between the communication slots. The user traffic volume may be determined by counting sizes of data packets transmitted by users. The user distribution information may be obtained through detection or obtained through calculation based on information such as delays reported by users.

Certainly, detection manners of a type of the state information and various types of information may alternatively be other conventional manners in the art. This is not specifically limited in embodiments of this application.

S702: The controller obtains first configuration information from the memory based on the state information.

In an implementation solution, the first configuration information indicates a plurality of subarrays in the antenna array 630 to output a plurality of types of analog beams. The first configuration information may be used to describe, in a list form, an address of an antenna included in each of the subarrays and a phase of a phase shifter corresponding to each antenna. The first configuration information may be stored in the memory 640, and may indicate a phase of a phase shifter in the phase shift circuit 620 in a list form. The controller 610 may read the first configuration information from the memory 640 based on a set read path when the network device 600 is started. Alternatively, the controller 610 may obtain the corresponding first configuration information from the memory 640 when the state information of the network device 600 reaches a specified condition. In addition, when the first configuration information is stored in the memory, S701 is an optional step. The memory 640 may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory.

S703: The controller outputs a first control signal to the phase shift circuit based on the first configuration information.

The first control signal indicates the phase shift circuit 620 to output the plurality of types of analog beams at a same moment through the plurality of subarrays. Generally, the phase shift circuit 620 includes a plurality of phase shifters. In some antenna arrays 630, an input end of each phase shifter is coupled to the RF link 650, and an output end of each phase shifter is coupled to one or more antennas. The first control signal may include phase adjustment signals of the plurality of phase shifters. In view of this, the controller 610 may adjust the phase of the phase shifter, so that the plurality of subarrays in the antenna array 630 can output different types of analog beams. The plurality of types of analog beams may be output at the same moment, so that compatibility of the plurality of types of analog beams is implemented on the same antenna array 630, thereby improving transmission efficiency.

In a possible implementation solution, the controller 610 may decouple the antenna array 630 into a plurality of regularly shaped subarrays based on the first configuration information. Then, the first control signal is output to the phase shift circuit 620 based on an analog beam type of each of the subarrays.

To better understand a decoupling manner of the antenna array 630, in embodiment of this application, an example in which the output end of each phase shifter in the phase shift circuit 620 is coupled to a plurality of antennas, and the antenna array 630 is disposed perpendicular to the ground is used, to illustrate the foregoing decoupling manner. For different scenarios, the antenna array may be decoupled into the plurality of regularly shaped subarrays in different decoupling manners. For example, in a common signaling slot, after the antenna array 630 is decoupled, some subarrays may be used to send common signal analog beams, and the other subarrays may be used to send traffic analog beams. Different antenna array decoupling methods may be used for different scenario requirements. Specific content is as follows.

### Embodiment 1

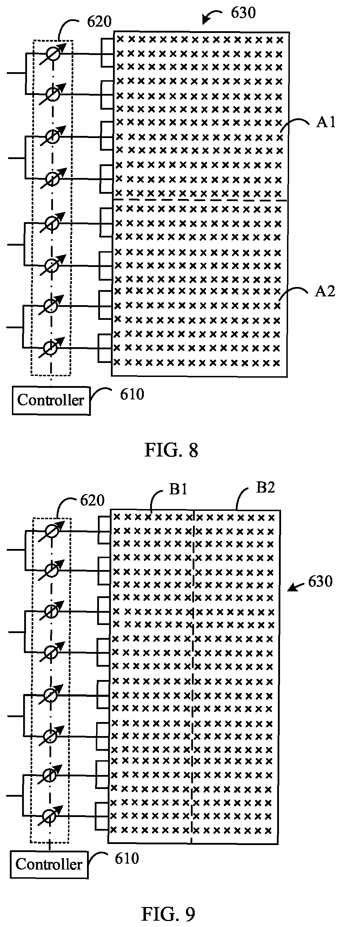

In some application scenarios, a terminal device has a low requirement for a vertical dimension of an analog beam (for example, in a suburban area, buildings are widely spaced and are low in height). In this case, the antenna array 630 may be decoupled into a plurality of subarrays in a direction parallel to the ground. For example, as shown in FIG. 8, it is assumed that the antenna array 630 is arranged in a rectangular pattern, and the antenna array 630 is disposed perpendicular to the ground. In this case, the antenna array 630 may be decoupled into two subarrays (A1 and A2) in the direction parallel to the ground. One of the two subarrays is used for sending a common signal analog beam (for example, sending an analog beam corresponding to a common signal such as an SSB, RMSI, and paging), and the other subarray is used for sending a traffic analog beam (for example, traffic data of an application) at a same moment.

During execution of the foregoing process, the controller 610 may first determine, based on the position information obtained by the positioning sensor, whether a position of the network device 600 has a low requirement for the vertical dimension of the analog beam. If determining that the position of the network device 600 has the low requirement for the vertical dimension of the analog beam, the controller 610 may obtain the corresponding configuration information from the memory. Then, the antenna array 630 is decoupled in the foregoing manner based on the configuration information, and the corresponding control signal is output to the phase shift circuit 620, to adjust the phase of each phase shifter in the phase shift circuit 620, so that a corresponding analog beam is output through each of the subarrays. In addition, a quantity of subarrays obtained by decoupling the antenna array 630 in the foregoing manner may be adjusted according to an actual requirement. This is not specifically limited in embodiments of this application.

Certainly, this is merely an example provided in embodiment of this application. Alternatively, the foregoing decoupling solution may be performed when the obtained position information is within a specified range or another determining condition is met.

### Embodiment 2

In some application scenarios, a terminal device has a high requirement for a vertical dimension of an analog beam (for example, in an urban area, buildings are closely spaced and are tall). In this case, the antenna array 630 may be decoupled into a plurality of subarrays in a direction perpendicular to the ground. For example, as shown in FIG. 9, it is assumed that the antenna array 630 is arranged in a rectangular pattern, and the antenna array 630 is disposed perpendicular to the ground. In this case, the antenna array 630 may be decoupled into two subarrays (B1 and B2) in the direction perpendicular to the ground. One of the two subarrays is used for sending a common signal analog beam (for example, sending an analog beam corresponding to a common signal such as an SSB, RMSI, and paging), and the other subarray is used for sending a traffic analog beam (for example, traffic data of an application) at a same moment.

During execution of the foregoing process, the controller 610 may first determine, based on the position information obtained by the positioning sensor, whether a position of the network device 600 has a high requirement for the vertical dimension of the analog beam. If determining that the position of the network device 600 has the high requirement for the vertical dimension of the analog beam, the controller 610 may obtain the corresponding configuration information from the memory. Then, the antenna array 630 is decoupled in the foregoing manner based on the configuration information, and the corresponding first control signal is output to the phase shift circuit 620, to adjust the phase of each phase shifter in the phase shift circuit 620, so that a corresponding analog beam is output through each of the subarrays. In addition, a quantity of subarrays obtained by decoupling the antenna array 630 in the foregoing manner may be adjusted according to an actual requirement. This is not specifically limited in embodiments of this application.

### Embodiment 3

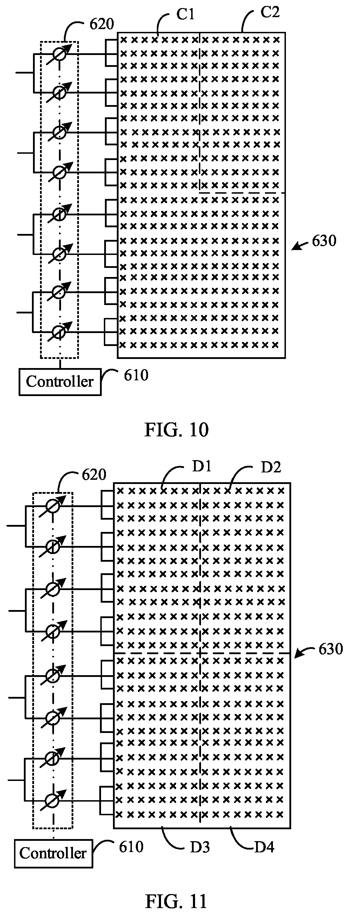

In some application scenarios, it is determined, based on the user distribution information, that user density is high, and a traffic data transmission requirement of each user is high (that is, the user traffic volume is large). In this case, a larger subarray may be used to transmit the traffic analog beam. For example, as shown in FIG. 10, it is assumed that the antenna array 630 is arranged in a rectangular pattern, and the antenna array 630 is disposed perpendicular to the ground. In this case, the entire antenna array 630 may be regarded as four rectangular units arranged in a 2x2 grid pattern. Antennas corresponding to three rectangular units are used as a first subarray (C1), and antennas corresponding to one rectangular unit are used as a second subarray (C2). Then, the traffic analog beam is sent through the first subarray, and the common signal analog beam is sent through the second subarray.

During execution of the foregoing process, the controller 610 may determine, based on a detected user traffic volume, whether current user traffic exceeds a set threshold. If the current user traffic exceeds the set threshold, the controller 610 may obtain the corresponding configuration information from the memory. Then, the antenna array 630 is decoupled in the foregoing manner based on the configuration information, and the corresponding first control signal is output to the phase shift circuit 620, to adjust the phase of each phase shifter in the phase shift circuit 620, so that a corresponding analog beam is output through each of the subarrays. In addition, a quantity of subarrays obtained by decoupling the antenna array 630 in the foregoing manner may be adjusted according to an actual requirement. This is not specifically limited in embodiments of this application.

### Embodiment 4

As shown in FIG. 11, it is assumed that the antenna array 630 is arranged in a rectangular pattern, and the antenna array 630 is disposed perpendicular to the ground. If a plurality of traffic analog beams and common signal analog beams need to be sent simultaneously, the entire antenna array 630 may be regarded as four rectangular units (D1 to D4) arranged in a 2x2 grid pattern. Each rectangular unit is used as a subarray (that is, the entire antenna array 630 is decoupled into four subarrays), three of the subarrays may be used for simultaneously sending different traffic analog beams, and one subarray is used for sending the common signal analog beam.

During execution of the foregoing process, the controller 610 may determine, based on current user traffic volume and user distribution information, whether a plurality of types of traffic analog beams and a plurality of types of common signal analog beams need to be sent. For example, when it is determined, based on the user distribution information, that users are distributed dispersedly and there are a large quantity of users with large traffic volumes, the antenna array may be decoupled into a plurality of subarrays in the foregoing manner, and the plurality of types of analog beams are sent at the same moment. The operator may set corresponding configuration information according to an actual requirement. The controller 610 may obtain current time and position information, and determine whether the current time is within a preset time period. If the current time is within the preset time period, the controller 610 may read corresponding configuration information, send a control signal to the phase shift circuit 620 based on the configuration information, to adjust the phase of each phase shifter in the phase shift circuit 620, so that the plurality of types of analog beams are output through the plurality of subarrays. In addition, during decoupling of the antenna array, comprehensive analysis may be further performed with reference to the current communication slot, user distribution information, and user traffic volume. Details are not described in embodiment of this application.

In a possible implementation solution, the controller 610 may decouple the antenna array into a plurality of irregularly shaped subarrays based on the first configuration information. Then, the first control signal is output to the phase shift circuit 620 based on an analog beam type of each of the subarrays.

To better understand a decoupling manner of the antenna array, in embodiment of this application, an example in which the output end of each phase shifter in the phase shift circuit 620 is coupled to a plurality of antennas, and the antenna array is disposed perpendicular to the ground is used, to illustrate the foregoing decoupling manner. For example, for different scenarios, the antenna array may be decoupled into the plurality of irregularly shaped subarrays in different decoupling manners. Specific content is as follows.

### Embodiment 5

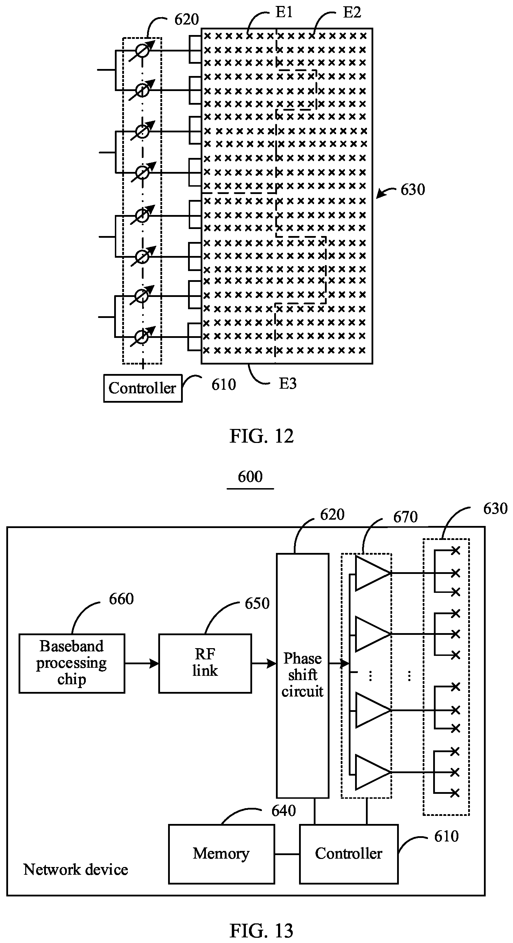

For example, as shown in FIG. 12, it is assumed that the antenna array is arranged in a rectangular pattern, and the antenna array is disposed perpendicular to the ground. If a plurality of types of analog beams need to be sent in this case, the antenna array may be decoupled into a plurality of irregularly shaped subarrays (E1 to E3) according to an actual requirement. Then, different types of analog beams are sent through the subarrays. A decoupling manner of the antenna array may be set according to an actual requirement. This is not specifically limited in embodiments of this application.

In the foregoing plurality of embodiments, if the antenna array is not disposed perpendicular to the ground, the antenna array may also be decoupled into a plurality of regularly shaped subarrays or irregularly shaped subarrays with reference to the foregoing decoupling manner.

Further, the decoupling manners of the antenna array in the foregoing several embodiments may be freely combined or transformed according to an actual requirement, to better meet use requirements in various scenarios. For example, when the controller 610 determines, based on the obtained position information, that the network device 600 is located in a suburban area, the antenna array may be first decoupled by using the solution in Embodiment 1, and the corresponding analog beam is sent through each of the subarrays. Then, the controller 610 may obtain the current time in real time or at intervals. If the current time is within the preset time period, the antenna array may be decoupled with reference to the manner in Embodiment 4, to send the plurality of traffic analog beams and common signal analog beams through the plurality of subarrays. In addition, the decoupling manner of the antenna array may also be determined with reference to a plurality of types of state information, and is not limited to decoupling the antenna array based on a type of state information. For example, the controller 610 may obtain at least two pieces of information such as the position information of the network device 600, the current time, the current communication slot, the user distribution information, and the user traffic volume. Then, a specific manner of decoupling the antenna array is determined through comprehensive analysis. For example, priorities of the foregoing four pieces of information may be set. Then, corresponding configuration information is obtained based on information with a highest priority, and a plurality of types of analog beams are sent simultaneously after the antenna array is decoupled based on the configuration information.

Certainly, the foregoing solution is merely an example provided in embodiments of this application. Different types of analog beams may also include analog beams in a plurality of forms and at a plurality of angles. This is not specifically limited in embodiments of this application. A specific decoupling manner of the antenna array and a type of an analog beam sent through each of the subarrays after the antenna array is decoupled may be set based on an actual use requirement. This is not specifically limited in embodiments of this application. In addition, in actual use, the antenna array may alternatively be decoupled into a plurality of regularly shaped subarrays in another manner. For example, decoupling may be performed along a diagonal pattern, in a square-loop pattern, or the like. In addition, a quantity of subarrays may be adjusted based on a quantity of signals that need to be sent at the same moment. This is not specifically limited in embodiments of this application.

In addition, in a non-common signaling slot or an uplink slot, the antenna array may also be decoupled into a plurality of regularly shaped subarrays or irregularly shaped subarrays based on a scenario requirement with reference to the foregoing decoupling manner. Types of analog beams sent through the subarrays in the non-common signaling slot and in the common signaling slot may be the same or different. In the uplink slot, if the antenna array is decoupled in the manner in Embodiment 1 to Embodiment 3, an analog beam of a physical random access channel (physical random access channel, PRACH) may be sent through one subarray, and an analog beam of a physical uplink shared channel (physical uplink shared channel, PUSCH) or a physical uplink control channel (physical uplink control channel, PUCCH) may be sent at a same moment through the other subarray. If the decoupling manner in the foregoing Embodiment 4 is used, each of the four subarrays may send an analog beam of one channel. For example, the four subarrays may respectively send an analog beam of a PRACH, analog beams of PUSCHs of two different users, and an analog beam of a PUCCH. If the decoupling manner in the foregoing Embodiment 5 is used, the analog beam sent through each of the subarrays may be set according to an actual requirement. In addition, an angle of each analog beam may be adjusted according to an actual requirement. This is not specifically limited in embodiments of this application. Further, in different slots, when the antenna array 630 is decoupled in the foregoing manner, a quantity of subarrays, shapes of the subarrays, and a channel sent on each of the subarrays may be adjusted according to an actual requirement. This is not specifically limited in embodiments of this application.

In a possible implementation solution, when users are centralized or far away from the network device 600, the controller 610 may obtain second configuration information. The second configuration information indicates the entire antenna array to output a single analog beam. Then, the controller 610 may output a third control signal to the phase shift circuit 620 based on the second configuration information. The third control signal indicates the phase shift circuit 620 to output the single analog beam through the entire antenna array. The second configuration information may be pre-stored in the memory of the network device 600 by the operator based on a requirement of a use scenario. The controller 610 may directly read the second configuration information from the memory after being powered on. Then, the controller 610 controls, based on the second configuration information, the phase shift circuit to send the analog beam through the entire antenna array.

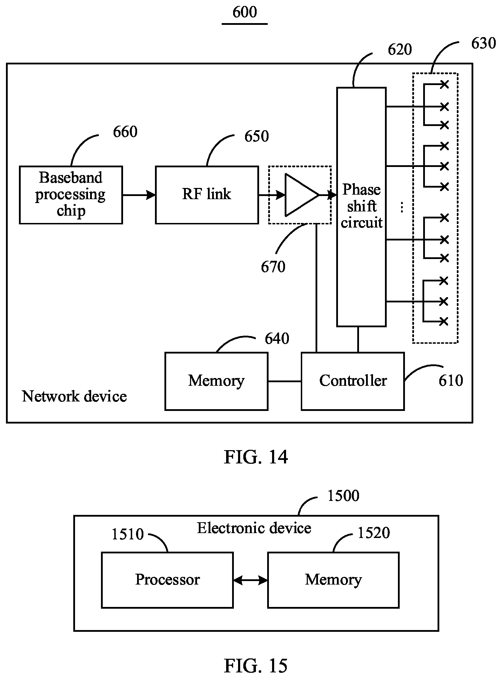

In a possible implementation solution, after the antenna array is decoupled into the plurality of subarrays, a gain of the analog beam output by each of the subarrays is reduced, and a signal transmission distance is reduced. To meet a requirement for the signal transmission distance after the antenna array is decoupled, power of the analog beam output by each of the subarrays in the antenna array may be adjusted. To resolve this problem, the network device 600 further includes a variable gain amplification circuit 670. In an example, the variable gain amplification circuit 670 may include a plurality of variable power amplifiers. As shown in FIG. 13, each phase shifter in the phase shift circuit is coupled to one or more corresponding antennas in the antenna array through one variable power amplifier. The controller 610 may control, through the variable power amplifiers, the power of the analog beam sent by each of the subarrays in the antenna array. In another example, the variable gain amplification circuit may alternatively use only one variable power amplifier. As shown in FIG. 14, the variable gain amplification circuit 670 may alternatively be coupled to the phase shift circuit 620, in other words, a plurality of phase shifters in the phase shift circuit are coupled to the RF link 650 through the same variable power amplifier. In view of this, the variable gain amplification circuit 670 can control, through only one variable power amplifier, power of an analog beam sent by one or more subarrays in the antenna array, to reduce costs.

In an example, it is assumed that a subarray is 1/X of the entire antenna array, a power (dB) increase value Z of the subarray may be calculated with reference to the following manner:
Z=101gX.

In the foregoing implementation process, a power increase value of each of the subarrays may alternatively be set according to an actual requirement, and is not limited to being obtained through calculation according to the foregoing method. For example, when a subarray is 1/2 of the entire antenna array, a power increase value of the subarray is 3 dB. For example, when a subarray is 1/4 of the entire antenna array, a power increase value of the subarray is 6 dB.

In a possible implementation solution, as shown in FIG. 15, an embodiment of this application further provides an electronic device 1500. The electronic device 1500 includes a processor 1510 and a memory 1520 coupled to the processor 1510. The memory 1520 stores computer program instructions. When the computer program instructions are executed by the processor 1510, the foregoing signal sending method may be implemented. The processor 1510 includes but is not limited to a central processing unit (central processing unit, CPU), a network processing unit (network processing unit, NPU), a graphics processing unit (graphics processing unit, GPU), a digital signal processor (digital Signal processor, DSP), a general-purpose processor, or the like. The memory 1520 may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory.

In an implementation solution, an embodiment of this application further provides a computer-readable storage medium. The computer-readable storage medium stores computer program instructions. When the computer program instructions are executed by a processor, the foregoing signal sending method is implemented. The computer-readable storage medium may be any medium that can store program code, such as a USB flash drive, a removable hard disk, a read-only memory (read-only memory, ROM), a random access memory (random access memory, RAM), a magnetic disk, or an optical disc.

The method steps in the foregoing embodiments may be implemented in a hardware manner, or may be implemented by executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a terminal device. Certainly, the processor and the storage medium may alternatively exist as discrete components in a network device or a terminal device.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, like a server or a data center, integrating one or more usable media. The usable medium may be a magnetic medium, for example, a floppy disk, a hard disk drive, or a magnetic tape, may be an optical medium, for example, a digital video disc (digital video disc, DVD), or may be a semiconductor medium, for example, a solid-state drive (solid-state drive, SSD).

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A signal sending method, applied to a controller of a network device, wherein the network device further comprises a phase shift circuit coupled to the controller and an antenna array coupled to the phase shift circuit, and the method comprises:
obtaining first configuration information, wherein the first configuration information indicates a plurality of subarrays in the antenna array to output a plurality of types of analog beams at a same moment; and
outputting a first control signal to the phase shift circuit based on the first configuration information, wherein the first control signal indicates the phase shift circuit to output a plurality of types of analog beams at a same moment through the plurality of subarrays.

2. The method according to claim 1, wherein the step of obtaining the first configuration information comprises:
receiving current state information of the network device; and
obtaining the first configuration information based on the state information.

3. The method according to claim 2, wherein the state information comprises at least one of position information of the network device, current time, a current communication slot, user distribution information, and a user traffic volume.

4. The method according to any one of claims 1 to 3, wherein the step of outputting the first control signal to the phase shift circuit based on the first configuration information comprises:
decoupling the antenna array into a plurality of regularly shaped subarrays based on the first configuration information; and
outputting the first control signal to the phase shift circuit based on an analog beam type of each of the subarrays.

5. The method according to any one of claims 1 to 3, wherein the step of outputting the first control signal to the phase shift circuit based on the first configuration information comprises:
decoupling the antenna array into a plurality of irregularly shaped subarrays based on the first configuration information; and
outputting the first control signal to the phase shift circuit based on an analog beam type of each of the subarrays.

6. The method according to any one of claims 1 to 5, wherein the network device further comprises a variable gain amplification circuit, the variable gain amplification circuit is coupled between the antenna array and the phase shift circuit, and the method further comprises:
sending a second control signal to the variable gain amplification circuit based on the first configuration information, wherein the second control signal indicates the variable gain amplification circuit to increase power of an analog beam output by each of the subarrays.

7. The method according to any one of claims 1 to 5, wherein the network device further comprises a variable gain amplification circuit, the variable gain amplification circuit is coupled to the phase shift circuit, and the method further comprises:
sending a second control signal to the variable gain amplification circuit based on the first configuration information, wherein the second control signal indicates the variable gain amplification circuit to increase power of an analog beam output by each of the subarrays.

8. The method according to claim 6 or 7, wherein a power increase amplitude of the analog beam output by each of the subarrays is determined based on a ratio of each of the subarrays to the antenna array.

9. The method according to any one of claims 1 to 8, wherein the method further comprises:
obtaining second configuration information, wherein the second configuration information indicates the entire antenna array to output a single analog beam; and
outputting a third control signal to the phase shift circuit based on the second configuration information, wherein the third control signal indicates the phase shift circuit to output the single analog beam through the entire antenna array.

10. An electronic device, comprising a memory and a processor, wherein the memory stores computer program instructions, and when the computer program instructions are executed by the processor, the method according to any one of claims 1 to 9 is implemented.

11. A computer-readable storage medium, storing computer program instructions, wherein when the computer program instructions are executed by processor, the method according to any one of claims 1 to 9 is implemented.

12. A computer program product, wherein the computer program product comprises computer instructions, and when the computer instructions are run on a computer, the computer is caused to perform the method according to any one of claims 1 to 9.
